# EUROPÄISCHE PATENTSCHRIFT

(11) **EP 1 196 305 B1**
(45) Veröffentlichungstag und Bekanntmachung des Hinweises auf die Patenterteilung: **14.04.2004**
(21) Anmeldenummer: 00951387.0
(22) Anmeldetag: 14.07.2000
(51) Int. Cl.: B60L 5/20

(54) **SCHLEIFSTÜCK FÜR STROMABNEHMER UND VERFAHREN ZU SEINER HERSTELLUNG**
PANTOGRAPH SLIPPER FOR CURRENT COLLECTORS AND METHOD FOR PRODUCING THE SAME
FROTTEUR POUR PANTOGRAPHE ET SON PROCEDE DE PRODUCTION

(30) Priorität: 16.07.1999 DE 29912451 U
(43) Veröffentlichungstag der Anmeldung: 17.04.2002
(73) Patentinhaber: Hoffmann & Co. Elektrokohle Aktiengesellschaft, 4823 Steeg (AT)
(72) Erfinder: WALLMANN, Herbert, A-4823 Steeg (AT); RASTL, Hans, A-4822 Bad Goisern (AT)
(74) Vertreter: Glawe. Delfs. Moll
(86) Internationale Anmeldenummer: PCT/EP2000/006754
(87) Internationale Veröffentlichungsnummer: WO 2001/005617

(56) Entgegenhaltungen:
- DE-U- 9 401 585
- JP-A- 10 285 703

## Beschreibung

Die Erfindung betrifft ein Schleifstück für Stromabnehmer mit einem langgestreckten, eigensteifen Träger mit im wesentlichen ebener Oberseite, und mit einer Schleifleiste aus Kohlematerial, die auf der Oberseite des Trägers durch Kleben befestigt ist.

Ein Schleifstück dieser Art ist beispielsweise aus DE-4336705 C2 bekannt. Ähnliche Schleifstücke sind ferner bekannt aus DE-3817743 C2, DE-3821254 A1 und DE-3821255 A1, wobei jedoch hier der Träger an seiner Oberseite seitliche hochstehende Ränder geringer Höhe aufweist, die die auf dem Träger befestigte Kohleleiste seitlich übergreifen. GB-719810 offenbart ein Schleifstück mit einem aus Blech gebogenen Träger, an dem die Kohleleiste schwalbenschwanzartig eingeklemmt ist.

Bei Träger mit einer vollständig flachen Oberseite ist die Herstellung der Verbindung zur Kohleleiste besonders einfach. Auch haben solche Träger ein geringeres Gewicht als Träger mit seitlich hochstehenden, die Kohleleiste übergreifenden Rändern. Andererseits bieten Träger mit seitlich hochstehenden Rändern einen besseren Schutz der Klebefuge zwischen Kohleleiste und Träger gegen Witterungseinflüsse, Beschädigung durch Lichtbogen und dergleichen. Die hochstehenden Ränder leisten jedoch aufgrund ihrer geringen Höhe nur einen geringen Beitrag zur Steifigkeit des Schleifstücks.

JP-10 285703 A offenbart ein Schleifstück für Stromabnehmer, das zwei Schleifleisten aus Kohlematerial und einen langgestreckten, eigensteifen Träger mit flacher Oberseite aufweist. Die unteren Ränder der Schleifleisten sind profiliert und bilden mit passenden metallischen Leisten Schwalbenschwanzverbindungen. Diese Leisten wiederum sind mittels Bolzen auf der flachen Oberseite des Trägers befestigt. Um die Seitenflächen der Leisten und des Trägers gegen Lichtbögen zu schützen sind über die Oberseite des Trägers nach oben ragende Platten aus einer faserverstärkten Kohlemasse an den Seitenwänden befestigt.

DE-94 01 585 U offenbart ein Schleifstück für Stromabnehmer, mit einem langgestreckten, eigensteifen Träger und mit einer Schleifleiste, die aus Kohlematerial bestehen kann und die auf der Oberseite des Trägers durch Klebung unter Bildung einer Klebefuge befestigt ist. Der Träger weist seitlich hochstehende Ränder auf, die die Klebefuge schützen. Um der Klebefuge einen erhöhten Schutz gegen Lichtbögen zu geben sind die Seitenwände, einschließlich ihrer hochgezogenen Ränder, an ihren Außenseiten mit elektrisch isolierenden Beschichtungen versehen.

Der Erfindung liegt die Aufgabe zugrunde, ein Schleifstück der genannten Art mit einfachen Mitteln, und ohne daß das Trägerprofil geändert werden muß, so zu verbessern, daß es einen verbesserten Schutz der Klebefuge zwischen Kohleleis-te und Träger insbesondere gegen Lichtbogeneinwirkungen sowie auch gegen sonstige thermische und mechanische Einwirkungen bietet und eine erhöhte Steifigkeit aufweist, die auch nachträglich an die betrieblichen Erfordernisse anpassbar ist.

Die Aufgabe wird erfindungsgemäße gelöst durch das im Anspruch 1 angegebene Schleifstück und das Verfahren gemäß Anspruch 9. Die Unteransprüche beziehen sich auf vorteilhafte weitere Ausgestaltungen der Erfindung.

Durch die Anbringung der dünnen Abdeckprofile an der Seitenwandung des Trägers, die den Bereich der Klebefuge überdecken, wird mit sehr einfachen und preisgünstigen Mitteln ein Schutz der Klebefuge vor äußeren Einwirkungen erreicht, ohne daß das Trägerprofil selbst geändert werden muß und ohne daß das Gewicht des Schleifstücks wesentlich erhöht wird. Gleichzeitig kann durch die Anbringung der Abdeckprofile die Steifigkeit des Schleifstücks bzw. des mit ihm ausgerüsteten gesamten Stromabnehmersystems erhöht und gezielt, z.B. auch über Teilabschnitte der Länge des Schleifstücks, an die betrieblichen Erfordernisse angepaßt werden.

Die Erfindung kann insbesondere dazu dienen, einen vorhandenen Schleifstücktyp, der in der Praxis bereits eingeführt ist und bei dem ein Trägerprofil mit flacher Oberseite verwendet wird, so umzurüsten, daß er als Hochgeschwindigkeitsschleifstück verwendet werden kann, das den erhöhten Beanspruchungen bei Hochgeschwindigkeitsbetrieb standhalten kann und an die dabei auftretenden extremen tribologischen und thermischen bzw. klimatischen Anforderungen, auch im grenzüberschreitenden Verkehr, angepaßt ist.

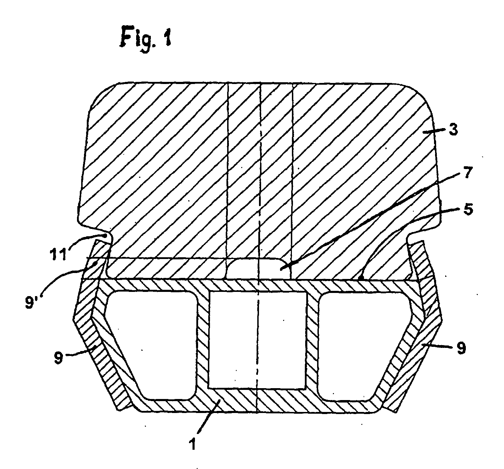

Eine Ausführungsform der Erfindung wird anhand der Zeichnung näher erläutert. Diese zeigt einen Querschnitt durch ein erfindungsgemäßes Schleifstück. Die Formgebung des Schleifstücks in seiner Längsrichtung ist dem Fachmann bekannt, hierfür kann auf die obengenannten Druckschriften verwiesen werden.

Das in der Zeichnung dargestellte Schleifstück besteht aus einem Träger 1 mit ebener Oberseite, und aus einer Schleifleiste 3 aus Kohlewerkstoff, die auf der flachen Oberseite des Trägers 1 unter Bildung einer Klebefuge 5 aufgeklebt ist. Eine Nut 7 an der Unterseite der Schleifleiste 3 kann in an sich bekannter Weise als Bruchdetektorkänal dienen. Die Schleifleiste 3 kann im Bereich ihrer Unterseite eine galvanisch aufgebrachte leitfähige Schicht aufweisen (nicht dargestellt), die den Stromtransport in Längsrichtung und den Stromübergang zwischen der Kohleleiste 3 und dem Träger 1 verbessert. Der Träger 1 besteht vorzugsweise aus einem extrudierten Profil aus Metall, insbesondere aus Aluminium.

Die Zeichnung zeigt den Querschnitt des Schleifstücks ungefähr im Maßstab 2:1.

An jeder seitlichen Außenfläche des Trägers 1 ist ein dünnes Abdeckprofil 9 befestigt, das sich über die Länge des Schleifstücks erstreckt. Jedes Abdeckprofil 9 hat einen in Form eines flachen V gewinkelten Querschnitt, der der Außenkontur der Seitenfläche des Trägers 1 folgt. Jedes Abdeckprofil 9 ragt oben über die flache Oberseite des Trägers 1 hinaus, so daß es die Klebefuge 5 und den unteren Bereich der Kohleleitste 3 seitlich abdeckt.

Zur Aufnahme des oberen Abschnitts 9' jedes Abdeckprofils 9 hat die Kohleleiste eine seitliche Ausnehmung 11. Die beiden Ausnehmungen 11 sind so geformt, daß der untere Bereich der Kohleleiste 3 eine Schwalbenschwanzform hat. Der obere Bereich 9' jeder Abdeckleiste liegt vorzugsweise federnd mit Vorspannung gegen die Seitenfläche der Kohleleiste 3 an. Auf diese Weise wird die Klebeverbindung 5 zwischen Kohleleiste 3 und Träger 1 zusätzlich durch eine mechanische Schwalbenschwanzverbindung verstärkt.

Jedes Abdeckprofil 9 hat vorzugsweise eine geringe Dicke, z.B. 2 mm. Die Abdeckprofile 9 sind vorzugsweise aus Metallblech, insbesondere Aluminium, durch Abschneiden und Abkanten hergestellt, können aber z.B. auch separat extrudiert sein. Die Abdeckprofile 9 können am Träger 1 durch Nieten, Schweißen, Kleben oder dergleichen befestigt sein. Die Befestigung der Abdeckprofile 9 am Träger 1 erfolgt vorzugsweise nach dem Verkleben der Kohleleiste 3 mit dem Träger 1, kann aber auch vor dem Klebevorgang erfolgen. Die Befestigung der Abdeckprofile 9 am Träger 1 sollte auf der gesamten Länge des jeweiligen Abdeckprofils 9 hinreichend mechanisch belastbar sein, damit das Abdeckprofil als integriertes Konstruktionsteil zur Steifigkeit des Schleifstückes beitragen kann.

Vor allem aus Gründen der Erhöhung der Steifigkeit ist es vorteilhaft, wenn sich jedes Abdeckprofil, wie dargestellt, über den größten Teil der Höhe des Trägers 1 erstreckt und über die Oberseite des Trägers nach oben genügend weit vorspringt. Vorzugsweise steht jedes Abdeckprofil um mindestens 3 mm über die flache Oberseite des Trägers über. Die Abdeckprofile 9 erhöhen vor allem die Steifigkeit der Schleifleiste in vertikaler Richtung, können sich aber aufgrund ihrer V-förmigen Profilform auch in Querrichtung des Trägers, d.h. in Fahrtrichtung des Stromabnehmers, versteifend auswirken.

Obwohl die oberen Bereiche 9' der Abdeckprofile 9 vorzugsweise mit Vorspannung an der Kohleleiste 3 anliegen, kann das Schleifstück auch so ausgeführt sein, daß die Abdeckprofile 9 ohne Vorspannung an der Kohleleiste 3 anliegen oder sogar keine Berührung mit der Kohleleiste 3 haben.

Die zusätzlich angebrachten Abdeckprofile 9 sollen in erster Linie den Bereich der Klebefuge 5 vor Lichtbogeneinbränden und somit vorzeitiger Zerstörung des Trägers 1 schützen. Zusätzlich bietet die Schwalbenschwanzverbindung zwischen den Abdeckprofilen und der Kohleleiste 3 eine mechanische Verstärkung der Klebeverbindung. Dies kann bei thermischer Überlast bzw. partiell zerstörter Klebeverbindung einen Verlust der Kohleleiste infolge Schlageinwirkung verhindern.

Die Anbringung der erfindungsgemäßen Abdeckprofile 9 kann entsprechend den Erfordernissen auch nur in Teilbereichen der Länge des Schleifstückes erfolgen. Dadurch lassen sich die Eigenschaften des Schleifstücks, insbesondere auch hinsichtlich der Biegesteifigkeit, mit einem Minimum an zusatzlichem Gewicht wesentlich verbessern und den jeweiligen Erfordernissen auf einfachem Weg anpassen.

In Längsrichtung des Schleifstücks gesehen sollten sich die Abdeckprofile 9 in der Regel mindestens über denjenigen mittleren Bereich der Gesamtlänge erstrecken, der im Betrieb mit dem Oberleitungsdraht zusammenwirkt. Die hierfür erforderliche Länge des Abdeckprofils 9 wird dann von den konstruktiven Gegebenheiten der Fahrleitung, mit der der Stromabnehmer zusammenwirken soll, abhängig sein, insbesondere der Amplitude der Zick-Zack-Verlegung des Fahrdrahtes. Falls das Schleifstück, wie bekannt, an beiden Enden abgebogene Hörner aufweist, können die Abdeckprofile 9 im Bereich dieser Hörner weggelassen werden, da die Hörner im Hochgeschwindigkeitsbetrieb außerhalb des Bereichs des O-berleitungsdrahtes, und damit normalerweise auch außerhalb des Bereichs der Lichtbogenbildung, liegen.

Die Erfindung ist nicht auf die Einzelheiten der dargestellten Ausführungsform beschränkt. So kann die Kohleleiste anstelle des in der Zeichnung dargestellten Querschnitts mit seitlichen Einkerbungen auch einen rechteckigen oder annähernd rechteckigen bzw. einen trapezförmigen Querschnitt aufweisen. Der.Träger kann, wie dargestellt, eine vollständig ebene Oberseite haben oder aber, in an sich bekannter Weise, an den beiden Längsseiten seiner Oberseite hochstehende Ränder geringer Höhe aufweisen, die als Fügehilfe zur Zentrierung der Kohleleiste relativ zum Träger beim Verklebevorgang dienen können.

Grundsätzlich können die erfindungsgemäßen Abdeckprofile, in beliebiger Länge, bei jedem existierenden Schleifstücktyp, unabhängig von der Querschnittsform der Kohleleiste oder des Trägers, zur gezielten Verbesserung der oben angesprochenen Eigenschaften nachträglich angebracht werden. Die Abdeckprofile liefern in jedem Fall eine verbesserte Steifigkeit des Schleifstücks, einen Schutz der Klebefuge vor Witterurigs- und Lichtbogeneinflüsse und, falls die Abdeckprofile mit Vorspannung gegen die Kohleleiste anliegen bzw. durch einen nachträglichen Bördelvorgang gegen die Kohleleiste angepreßt werden, einen Schutz der Klebeverbindung auch gegen mechanische Einwirkung, insbesondere gegen Schläge.

## Patentansprüche

1. Schleifstück für Stromabnehmer, mit einem langgestreckten, eigensteifen Träger (1) mit im wesentlichen flacher Oberseite, und mit einer Schleifleiste (3), aus Kohlematerial, die auf der Oberseite des Trägers (1) durch Klebung unter Bildung einer Klebefuge (5) befestigt ist,
**dadurch gekennzeichnet, daß** an mindestens einer Seitenwandung des Trägers (1) ein Abdeckprofil (9) befestigt ist, das über die Oberseite des Trägers nach oben ragt und die Klebefuge (5) und den unteren Bereich der Kohleleiste (3) seitlich abdeckt.

2. Schleifstück nach Anspruch 1,
**dadurch gekennzeichnet, daß** jedes Abdeckprofil (9) aus einem Metallblech besteht.

3. Schleifstück nach Anspruch 2,
**dadurch gekennzeichnet, daß** jedes Abdeckprofil (9) aus Aluminium besteht.

4. ' Schleifstück nach einem der Ansprüche 1 bis 3,
**dadurch gekennzeichnet, daß** jedes Abdeckprofil (9) mit federnder Vorspannung gegen die Kohleleiste (3) anliegt.

5. Schleifstück nach einem der Ansprüche 1 bis 4,
**dadurch gekennzeichnet, daß** zwei Abdeckprofile (9) an den beiden Seiten des Trägers (1) vorgesehen sind, und daß die Abdeckprofile (9) in ihrem oberen Bereich (9') zueinander geneigt sind und in seitliche Ausnehmungen (11) der Kohleleiste eingreifen und mit dieser eine Schwalbenschwanzverbindung bilden.

6. Schleifstück nach einem der Ansprüche 1 bis 5,
**dadurch gekennzeichnet, daß** das oder jedes Abdeckprofil (9) sich nur über einen Teilbereich der Länge des Schleifstücks erstreckt.

7. Schleifstück nach einem der Ansprüche 1 bis 6,
**dadurch gekennzeichnet, daß** sich das oder jedes Abdeckprofil (9) über den überwiegenden Teil der Höhe des Trägers (1) erstreckt.

8. Schleifstück nach einem der Ansprüch 1 bis 7,
**dadurch gekennzeichnet, daß** das oder jedes Abdeckprofil (9) um mindestens 3 mm oder mehr über die ebene Oberseite des Trägers (1) nach oben übersteht.

9. Verfahren zum Herstellen eines Schleifstücks für Stromabnehmer, bei dem eine Schleifleiste (3) aus Kohlematerial auf der im wesentlichen flachen Oberseite eines langgestreckten Trägers (1) durch Klebung unter Bildung einer Klebefuge (5) befestigt wird,
**dadurch gekennzeichnet, daß** nach dem Verkleben der Schleifleiste (3) mit dem Träger (1) an mindestens einer Seitenwandung des Trägers (1) ein Abdeckprofil (9) derart befestigt wird, daß es über die Oberseite des Trägers (1) nach oben ragt und die Klebefuge (5) sowie den unteren Bereich der Kohleleiste (3) seitlich abdeckt.

## Claims

1. A sliding contact for current collectors, having an elongate, inherently rigid support (1) with a substantially flat upper side, and having a contact strip (3) of carbon material, which is fastened to the upper side of the support (1) by adhesion to form an adhesive joint (5), **characterised in that** a covering profile (9) is fastened to at least one side wall of the support (1), which covering profile projects upwards over the upper side of the support and laterally covers the adhesive joint (5) and the lower region of the carbon strip (3).

2. A sliding contact according to Claim 1, **characterised in that** the each covering profile (9) consists of a metal plate.

3. A sliding contact according to Claim 2, **characterised in that** each covering profile (9) consists of aluminium.

4. A sliding contact according to any one of Claims 1 to 3, **characterised in that** each covering profile (9) is applied with resilient preloading against the carbon strip (3).

5. A sliding contact according to any one of Claims 1 to 4, **characterised in that** two covering profiles (9) are provided on either side of the support (1), and **in that** the covering profiles (9) are inclined towards one another in their upper region (9') and engage in lateral recesses (11) of the carbon strip and form with the latter a dovetail joint.

6. A sliding contact to any one of Claims 1 to 5, **characterised in that** the or each covering profile (9) extends only over a portion of the length of the sliding contact.

7. A sliding contact according to any one of Claims 1 to 6, **characterised in that** the or each covering profile (9) extends over the majority of the height of the support (1).

8. A sliding contact according to any one of Claims 1 to 7, **characterised in that** or each covering profile (9) projects upwards by at least 3 mm or more over the plane upper side of the support (1).

9. A method of producing a sliding contact for current collectors, in which a contact strip (3) consisting of carbon material is secured on the substantially flat upper side of an elongate support (1) by adhesion to form an adhesive joint (5), **characterised in that**, after the bonding of the contact strip (3) to the support (1), a covering profile (9) is so secured on at least one side wall of the support (1) that it projects upwards over the upper side of the support (1) and laterally covers the lower region of the contact strip (3).

## Revendications

1. Frotteur pour collecteur de courant, comportant un support (1) allongé, rigide en soi, avec une face supérieure sensiblement plate, et comportant une baguette frottante (3) en matériau au carbone qui est fixée sur la face supérieure du support (1) par collage, en formant un joint à la colle (5), **caractérisé en ce que** sur au moins une paroi latérale du support (1) est fixé un profilé de recouvrement (9) qui dépasse vers le haut de la face supérieure du support et qui recouvre latéralement le joint à la colle (5) et la zone inférieure de la baguette de carbone (3).

2. Frotteur selon la revendication 1, **caractérisé en ce que** chaque profilé de recouvrement (9) est constitué d'une tôle métallique.

3. Frotteur selon la revendication 2, **caractérisé en ce que** chaque profilé de recouvrement (9) est en aluminium.

4. Frotteur selon l'une des revendications 1 à 3, **caractérisé en ce que** chaque profilé de recouvrement (9) s'applique avec précontrainte élastique contre la baguette de carbone (3).

5. Frotteur selon l'une des revendications 1 à 4, **caractérisé en ce que** deux profilés de recouvrement (9) sont prévus sur les deux côtés du support (1), et **en ce que** les profilés de recouvrement (9) sont inclinés l'un par rapport à l'autre dans leur zone supérieure (9') et s'engagent dans des évidements (11) latéraux de la baguette de carbone et forment avec celle-ci une liaison à queue d'aronde.

6. Frotteur selon l'une des revendications 1 à 5, **caractérisé en ce que** le ou chaque profilé de recouvrement (9) ne s'étend que sur une section de la longueur du frotteur.

7. Frotteur selon l'une des revendications 1 à 6, **caractérisé en ce que** le ou chaque profilé de recouvrement (9) s'étend sur la majeure partie de la hauteur du support (1).

8. Frotteur selon l'une des revendications 1 à 7, **caractérisé en ce que** le ou chaque profilé de recouvrement (9) dépasse vers le haut d'au moins 3 mm ou plus de la face supérieure plane du support (1).

9. Procédé de fabrication d'un frotteur pour collecteur de courant, dans lequel une baguette frottante (3) en matériau de carbone est fixée sur la face supérieure sensiblement plate d'un support (1) allongé, par collage, en formant un joint à la colle (5), **caractérisé en ce qu'**après collage de la baguette frottante (3) avec le support (1), un profilé de recouvrement (9) est fixé sur au moins une paroi latérale du support (1), de manière à dépasser vers le haut de la face supérieure du support (1) et à recouvrir latéralement le joint à la colle (5) ainsi que la zone inférieure de la baguette de carbone (3).
